# EUROPEAN PATENT APPLICATION

(11) **EP 4 625 793 A1**
(43) Date of publication of application: **01.10.2025**
(21) Application number: 24166829.2
(22) Date of filing: 27.03.2024
(51) Int. Cl.: H02M 1/32, H02M 7/483

(54) **SUBMODULE FOR A CONVERTER SYSTEM**

(71) Applicant: Hitachi Energy Ltd, 8050 Zürich (CH)
(72) Inventor: Oedegard, Bjoern, 5300 Turgi (CH)
(74) Representative: Epping - Hermann - Fischer

(57) **Abstract**

Submodule (10) for a converter system (100) comprising a first connecting terminal (11), a second connecting terminal (12), a switching circuit (20) with a first power semiconductor switch (21) and a second power semiconductor switch (22), which are connected in series and can be turned on and off. The first connecting terminal (11) is connected to the node between the first power semiconductor switch (21) and the second power semiconductor switch (22). The submodule (10) further comprises an energy storage circuit (30) connected in parallel with the switching circuit (20): The energy storage circuit (30) comprises a first capacitor (31) with a first capacitance (311), a split inductor (32), which is connected in series with the first capacitor (31) and adapted for limiting current amplitudes and a second capacitor (41) with a second capacitance (411) acting as part of a commutating system (40), wherein the second capacitor (41) is arranged in parallel to the switching circuit (20) and in parallel to the first capacitor (31) and the split inductor (32). The submodule (10) further comprising a first crowbar (50), which is connected in parallel with the first capacitor (31) and which is adapted to dissipate energy from the first capacitor (31), comprising a first bypass thyristor (51) .

## Description

The present disclosure relates to a submodule for a converter system.

Submodules for converter systems, like modular multi-level converters, comprise connection terminals, an energy storage device and power semiconductor switches which are connected to the energy storage device. The power semiconductor switches can be switched on and off in such a way that in a first switching state the voltage dropping across the energy storage device can be generated and in a second switching state a zero voltage can be generated at the connection terminals.

If the power semiconductor switches fail, the energy storage device discharges into the fault location. The increased current can reach values of several hundreds of kiloamperes. Currents of this magnitude can cause significant destruction. For example, the housing of the power semiconductor switch can burst open and explosive gases can be produced as a result of an arc. The destruction of such a submodule can also damage neighboring submodules, creating a risk of a chain reaction. For this reason, the power semiconductor switches are arranged in a submodule housing that can shield the environment from flying parts and explosive gases. Therefore, the capacity of the energy storage device of the submodule is chosen to be small enough that in the event of a fault, the strength of the housing is sufficient, and the destruction is limited to a not hazardous level.

Alternatively, the stability of the submodule housing is further increased to prevent hazardous failures.

It is an object to provide a submodule for a converter system with as high an energy storage capacity as possible, while maintaining safety during operation of the converter system in case of a failure.

This object is solved by the features of the independent claims. Advantageous embodiments are indicated in the dependent claims.

Embodiments of the disclosure, for instance as claimed in the independent claim, address the above shortcomings in the art in whole or in part. Further embodiments of the submodule for a converter system are subject matter of the further claims.

According to an embodiment, there is provided a submodule for a converter system comprising a first connecting terminal, a second connecting terminal, and a switching circuit. The switching circuit comprises a first power semiconductor switch and a second power semiconductor switch, which are connected in series and can be turned on and off. The first connecting terminal is connected to the node between the first power semiconductor switch and the second power semiconductor switch. The submodule further comprises an energy storage circuit connected in parallel with the switching circuit. The energy storage circuit comprises a first capacitor with a first capacitance, a split inductor, which is connected in series with the first capacitor, and which is adapted for limiting current amplitudes and a second capacitor with a second capacitance acting as part of a commutating system and which is connected in parallel to the first capacitor and the split inductor. The submodule is not limited to one first capacitor and comprises optionally a plurality of first capacitors. The submodule further comprises a first crowbar, which is connected in parallel with the first capacitor and which is adapted to dissipate energy from the first capacitor. The first crowbar comprises a first bypass thyristor.

The first and second power semiconductor switches are connected in series and can be switched on and off, so that the submodule can be switched back and forth between different switching states. In a first switching state, in which, for example, the first power semiconductor switch is switched on, but the second power semiconductor switch is switched off, the voltage applied to the energy storage circuit, for example to the first capacitor, drops at the first and second connection terminals. In a second switching state, the first and second connection terminals are conductively connected to one another via the switched-on second power semiconductor switch, so that a zero voltage drops at the first and second connection terminals. The first connecting terminal is connected to the potential node between the first power semiconductor switch and the second power semiconductor switch. The second connecting terminal is for example directly connected to the second power semiconductor switch.

The energy storage circuit is connected in parallel to the switching circuit. The energy storage circuit comprises an energy storage device, for example the first capacitor and the second capacitor, for storing energy, in particular electric, magnetic or electromagnetic energy. The first capacitor provides sufficient capacitance for the submodule.

The energy storage circuit further comprises the split inductor, which keeps excess energy originating for example from the first capacitor away from the switching circuit, especially it keeps the energy away from the first and/or second power semiconductor switches. Excess energy could be released for example in case of a device failure inside the submodule. Examples for such failures are leg short circuits and terminal short circuits. A leg short circuit appears when both the first and second power semiconductor switches fail. Further failures are for example, a short circuit turn-off failure and overvoltage bypasses.

The second capacitor is part of the energy storage circuit and acts as a part of a commutating system, which is connected in parallel and in a low-inductance manner to the switching circuit. The second capacitor reduces additional switching overvoltages and minimizes increased switching losses. The second capacitance of the second capacitor is small enough to prevent hazardous explosion of the submodule when the second capacitor discharges directly into a shorted submodule. The submodule is not limited to one second capacitor and comprises optionally a plurality of second capacitors.

The first crowbar is connected in parallel with the first capacitor and is adapted to dissipate energy from the first capacitor. The first crowbar comprises a first bypass thyristor. The first crowbar dissipates as much as possible of the capacitor energy, therefore the inductance in the crowbar loop should be low compared to the split inductor. Furthermore, the crowbar must withstand a high current load integral, i.e., it must withstand a high current load over a certain time. The first crowbar is connected directly in parallel to the first capacitor. The first crowbar is used to dissipate as much as possible energy of the energy storage, for example from the first capacitor and the second capacitor. Thus, the split inductor and the first crowbar are adapted to limit the current surge. The first crowbar is not limited to one first bypass thyristor and may comprise more than one bypass thyristor. The plurality of bypass thyristors are connected in parallel or in series.

The split inductor is dimensioned sufficiently big enough to enable discharging of the first capacitor through the first bypass thyristor of the first crowbar. The split inductor is provided in between the first capacitor and the second capacitor.

According to a further embodiment the switching circuit comprises a third power semiconductor switch and a fourth power semiconductor switch, which are connected in series and can be turned on and off. The second connecting terminal is connected to the node between the third power semiconductor switch and the fourth power semiconductor switch.

According to a further embodiment the third power semiconductor switch and the fourth power semiconductor switch are connected in parallel to the first power semiconductor switch and the second power semiconductor switch.

The third and fourth power semiconductor switches are connected in series and can be switched on and off like the first and second power semiconductor switches, so that the submodule can be switched back and forth between different switching states. In a third switching state, in which, for example, the first power semiconductor switch and the fourth power semiconductor switch are switched on, but the second power semiconductor switch and the third power semiconductor switch are switched off, the voltage applied to the energy storage circuit drops at the first and second connection terminals, such that a positive voltage is generated.

In a fourth switching state, in which, for example, the second power semiconductor switch and the third power semiconductor switch are switched on, but the first power semiconductor switch and the fourth power semiconductor switch are switched off, the voltage applied to the energy storage circuit drops at the first and second connection terminals, such that a negative voltage is generated.

In a fifth switching state, the first and second connection terminals are conductively connected to one another via the switched-on first and third power semiconductor switch, so that a zero voltage drops at the first and second connection terminals. The second and fourth power semiconductor switches remain switched off.

In a sixth switching state, the first and second connection terminals are conductively connected to one another via the switched-on second and fourth power semiconductor switch, so that a zero voltage drops at the first and second connection terminals. The first and third power semiconductor switches remain switched off.

According to a further embodiment the first power semiconductor switch comprises a first power semiconductor device and a first diode connected anti-parallel to the first power semiconductor device and/or the second power semiconductor switch comprises a second power semiconductor device and a second diode connected anti-parallel to the second power semiconductor device.

According to a further embodiment the third power semiconductor switch comprises a third power semiconductor device and a third diode connected anti-parallel to the third power semiconductor device and/or the fourth power semiconductor switch comprises a fourth power semiconductor device and a fourth diode connected anti-parallel to the fourth power semiconductor device.

The combination of the split inductor and the first crowbar effectuates that a significant part of the energy in the energy storage circuit is dissipated in the crowbar thyristor instead of the power semiconductor switches.

According to a further embodiment the first power semiconductor switch and/or the second power semiconductor switch comprise insulated-gate bipolar transistors and/or silicon carbide-based devices.

For example, the semiconductor switches are placed inside a plastic module package.

According to a further embodiment the third power semiconductor switch and/or the fourth power semiconductor switch comprise insulated-gate bipolar transistors and/or silicon carbide-based devices.

The power semiconductor devices in the switching circuit are for example insulated-gate bipolar transistors (IGBT).

The probability of a catastrophic failure with explosion is strongly reduced by the combination of the split inductor and the first crowbar, even for the case of failure to turn off a shorted power semiconductor switch, like an insulated-gate bipolar transistor (IGBT). Therefore, a strongly reduced energy is involved when an IGBT chip fails to turn off in desaturation mode. Thus, a short circuit turn-off failure is not catastrophic anymore.

Additionally, or alternatively, at least one of the power semiconductor switches comprises silicon carbide-based devices, like SiC MOSFETs. Silicon carbide (SiC) short circuit turn-off capability requires an extremely fast protection concept. Because the failure to turn off the shorted SiC-switches is not catastrophic anymore the short circuit turn-off capability is not mandatory anymore, SiC-based devices can be protected more efficiently. The split inductor limits the energy that can flow into the power semiconductor switches, thus preventing a catastrophic failure.

The power semiconductor switches are assembled in modules with a number of power semiconductor devices, like IGBT chips, and a number of diodes, like diode chips, in one module. One or more modules can be connected in parallel to form one power semiconductor switch. For example, the semiconductor switches are placed inside a plastic module package.

The power semiconductor switches are not limited to just one power semiconductor device and one diode each. Alternatively, each power semiconductor switch comprises a plurality of power semiconductor devices and a corresponding number of diodes each. For example, each of the power semiconductor switches comprises two power semiconductor devices and two diodes. Thus, a power semiconductor switch comprises two pairs of one power semiconductor device and one diode. These two pairs are for example connected in parallel. The actual number of these pairs of power semiconductor device and diode is not limited to two and can also be three, four, five, six, etc.

Furthermore, the switching circuit is not limited to one or two power semiconductor switches. Alternatively, the switching circuit comprises more than two power semiconductor switches connected in parallel.

According to a further embodiment the split inductor comprises an inductor and a resistor connected in parallel with the inductor, wherein the resistor is a part of the commutating system.

The resistor is for example a damping resistor, which is required to damp the oscillations after switching transitions. The resistor is like the second capacitor a part of the commutating system. The resistor can be a linear resistor or a non-linear resistor. The inductor is for example a choke. The inductor in particular is not formed by a parasitic inductance, which is part of every electric device.

According to a further embodiment a second crowbar is arranged in parallel to the first crowbar.

According to a further embodiment the second crowbar comprises a second bypass thyristor and is connected in parallel with the first capacitor.

The second crowbar increases the capability to dissipate more energy from the first capacitor than just with the first crowbar. The second crowbar is basically constructed like the first crowbar but can also comprise different components with different threshold parameters. The second crowbar must also withstand a high current load integral, i.e., it must withstand a high current load over a certain time. The second crowbar is not limited to one second bypass thyristor and may comprise more than one bypass thyristor. The plurality of bypass thyristors are connected in parallel or in series. The submodule is not limited to one or two crowbars and can have a plurality of crowbars, each with one or a plurality of bypass thyristor/s, depending on the submodule requirements.

According to a further embodiment the value of the second capacitance is smaller than the value of the first capacitance.

The second capacitor has for example a significantly lower capacity compared to the energy storage device, i.e., the first capacitor. It creates the conditions to cause rapid commutation of the currents when switching the switching circuit. Furthermore, the minor part of the first capacitor energy together with the second capacitor energy which discharges into switching circuit does not cause hazardous explosions.

The surge current limiting means, like the split inductor, the first and second crowbar, are arranged in the submodule, which in the event of a fault reduce the amplitude of a current surge when the energy storage device, like the first capacitor, is discharged. For this purpose, the current surge limiting means are arranged in series or parallel with the energy storage device. They have the property that they reduce the discharge currents imposed to the semiconductor modules that arise in the event of a sudden discharge of the energy storage device, for example in the event of a short circuit. Therefore, the capacitance of the energy storage device can be increased without the risk of destruction of the submodule housing.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.

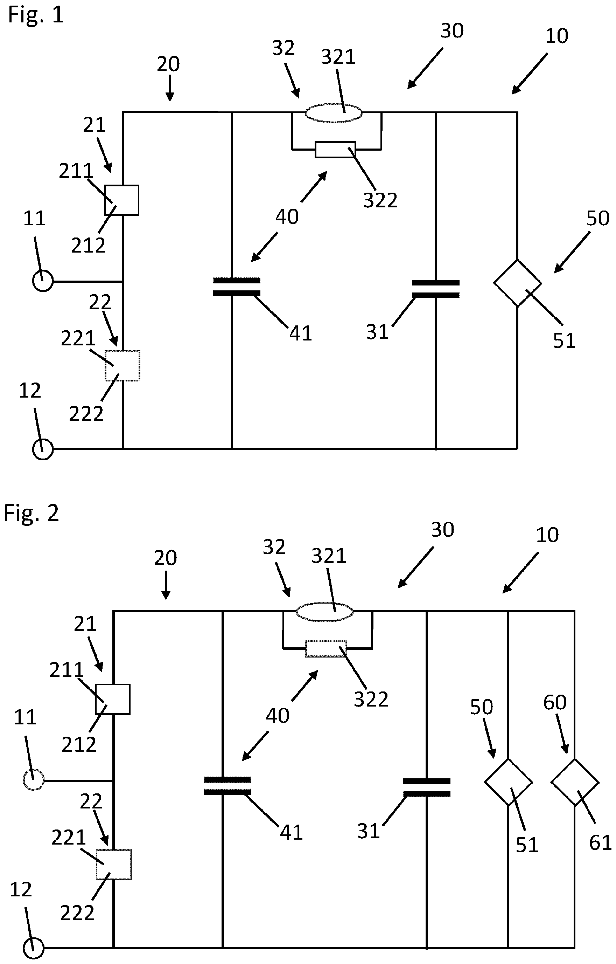

Figure 1 to 3 are schematic views of a submodule according to embodiments.

Figure 1 shows a submodule 10 for a converter system 100. The submodule 10 comprises a first connecting terminal 11, a second connecting terminal 12 and a switching circuit 20. The switching circuit 20 comprises a first power semiconductor switch 21 and a second power semiconductor switch 22, which are connected in series and can be turned on and off, so that the submodule 10 can be switched back and forth between different switching states. For example, in a first switching state, in which, the first power semiconductor switch 21 is on, but the second power semiconductor switch 22 is switched off, the voltage applied to the first capacitor 31 drops at the first connection terminal 11 and at the second connection terminal 12. In a second switching state, the first and second connection terminals 11, 12 are conductively connected to one another via the switched-on second power semiconductor switch 22, so that a zero voltage drops at the first and second connection terminals 11, 12. In this context, zero voltage does not mean mathematically zero, but instead very low compared to the voltage during the other switching state.

The first connecting terminal 11 is connected to the potential node between the first power semiconductor switch 21 and the second power semiconductor switch 22. The second connecting terminal 12 is for example directly connected to the second power semiconductor switch 22. The first power semiconductor switch 21 comprises a first power semiconductor device 211 and a first diode 212 connected anti-parallel to the first power semiconductor device 211. The second power semiconductor switch 22 comprises a second power semiconductor device 221 and a second diode 222 connected anti-parallel to the second power semiconductor device 221. The first power semiconductor device 211 and the second power semiconductor device 221 are for example an IGBT or a SiC-based device, like a SiC MOSFET. Therefore, the first power semiconductor switch 21 and/or the second power semiconductor switch 22 comprise insulated-gate bipolar transistors and/or silicon carbide-based devices, like SiC MOSFETs. Therefore, the switching circuit 20 comprises at least one of an IGBT and/or a SiC-based device. It is also possible to combine, for example, a SiC diode as an anti-parallel diode with a power semiconductor device in the power semiconductor switch.

The submodule 10 further comprises an energy storage circuit 30 connected in parallel with the switching circuit 20. The energy storage circuit 30 comprises a first capacitor 31 with a first capacitance. The second connecting terminal 12 is directly connected to the first capacitor 31. The first capacitor 31 is an energy storage device and is adapted for storing energy and providing it for the application. The energy can be electric, magnetic or electromagnetic energy. Therefore, the first capacitor 31 provides sufficient capacitance for the submodule 10. The energy storage circuit 30 further comprises a split inductor 32, which is connected in series with the first capacitor 31. The split inductor 32 is adapted for limiting current amplitudes. The split inductor 32 keeps excess energy originating for example from the first capacitor 31 away from the switching circuit 20. For example, the split inductor 32 keeps the energy away from the first power semiconductor switch 21 and/or from the second power semiconductor switch 22. Excess energy could be released for example in case of a device failure inside the submodule 10 or a short circuit inside the submodule 10.

The split inductor 32 comprises an inductor 321 and a resistor 322 connected in parallel with the inductor 321. The inductor 321 is for example a choke or a throttle. The inductor 321 in particular is not a parasitic inductance, which is part of every electric device. The resistor 322 is for example a damping resistor, which is required to damp the oscillations after switching transitions. The resistor 322 can be a linear resistor or a non-linear resistor. The resistor 322 is, like the second capacitor 41, a part of the commutating system 40.

The submodule 10 further comprises a first crowbar 50. The first crowbar 50 is connected in parallel with the first capacitor 31 and is adapted to dissipate energy from the first capacitor 31. The first crowbar 50 comprises a first bypass thyristor 51. The first crowbar 50 dissipates as much as possible of the energy from the energy storage circuit 30, i.e., from the first capacitor 31, therefore the inductance in the crowbar loop should be low compared to the split inductor 32. Furthermore, the first crowbar 50 must withstand a high current load integral, i.e., it must withstand a high current load over a certain time. The first crowbar 50 is connected directly in parallel to the first capacitor 31. The split inductor 32 and the first crowbar 50 are adapted to limit the current surge.

The split inductor 32 is dimensioned sufficiently big enough to enable discharging of the first capacitor 31 through the first bypass thyristor 51 of the first crowbar 50.

The energy storage circuit 30 further comprises a second capacitor 41 with a second capacitance acting as part of the commutating system 40. The second capacitor 41 is part of the commutating system 40, which is connected in parallel in a low-inductance manner to the switching circuit 20. The second capacitor 41 is also connected in parallel to the first capacitor and the split inductor 32. The second capacitor 41 reduces additional switching overvoltages and minimizes increased switching losses. The second connecting terminal 12 is directly connected to the second capacitor 41. The second capacitance of the second capacitor 41 is small enough to prevent hazardous explosion of the submodule 10 when the second capacitor 41 discharges directly into a shorted submodule 10. The value of the second capacitance of the second capacitor 41 is smaller than the value of the first capacitance of the first capacitor 31.

Figure 2 shows a schematic view of the submodule 10. The submodule 10 is basically the same as shown in Figure 1 with the difference, that the submodule 10 further comprises a second crowbar 60. The second crowbar 60 is arranged in parallel to the first crowbar 50. The second crowbar 60 comprises a second bypass thyristor 61. The second crowbar 60 is connected in parallel with the first capacitor 31. The second crowbar 60 increases the capability to dissipate more energy from the first capacitor 31. The second crowbar 60 is basically constructed like the first crowbar 50 but can also comprise different components with different threshold parameters. The second crowbar 60 must also withstand a high current load integral, i.e., it must withstand a high current load over a certain time. The inductance of the second crowbar 60 is for example also in the range from 50nH to 100nH.

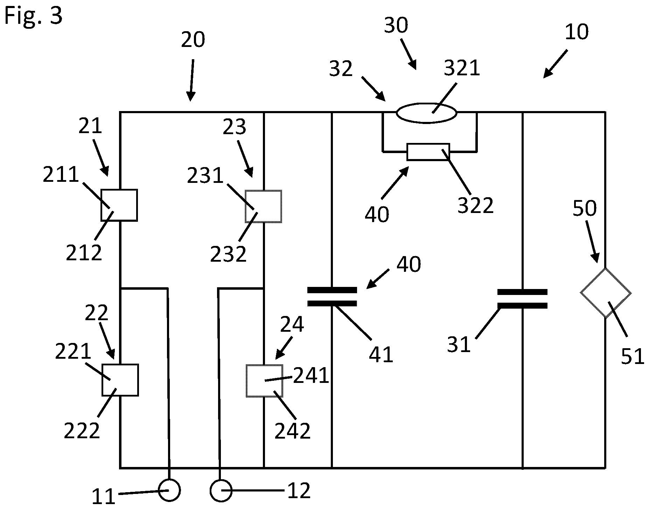

Figure 3 shows a schematic view of the submodule 10. The submodule 10 is basically the same as shown in Figure 1 with the difference, that the switching circuit 20 comprises a third power semiconductor switch 23 and a fourth power semiconductor switch 24, which are connected in series and can be turned on and off, such that the submodule 10 can be switched back and forth between different switching states. The second connecting terminal 12 is connected to the node between the third power semiconductor switch 23 and the fourth power semiconductor switch 24. The third power semiconductor switch 23 and the fourth power semiconductor switch 24 are connected in parallel to the first power semiconductor switch 21 and the second power semiconductor switch 22.

In a third switching state, in which, for example, the first power semiconductor switch 21 and the fourth power semiconductor switch 24 are switched on, but the second power semiconductor switch 22 and the third power semiconductor switch 23 are switched off, the voltage applied to the energy storage circuit 30, for example to the first capacitor 31, drops at the first and second connection terminals 11, 12, such that a positive voltage is generated.

In a fourth switching state, in which, for example, the second power semiconductor switch 22 and the third power semiconductor switch 23 are switched on, but the first power semiconductor switch 21 and the fourth power semiconductor switch 24 are switched off, the voltage applied to the energy storage circuit 30, for example to the first capacitor 31, drops at the first and second connection terminals 11, 12, such that a negative voltage is generated.

In a fifth switching state, the first and second connection terminals 11, 12 are conductively connected to one another via the switched-on first and third power semiconductor switch 21, 23, so that a voltage close to zero drops at the first and second connection terminals 11, 12. The second and fourth power semiconductor switches 22, 24 remain switched off.

In a sixth switching state, the first and second connection terminals 11, 12 are conductively connected to one another via the switched-on second and fourth power semiconductor switch 22, 24, so that a voltage close to zero drops at the first and second connection terminals 11, 12. The first and third power semiconductor switches 21, 23 remain switched off.

The third power semiconductor switch 23 comprises a third power semiconductor device 231 and a third diode 232 connected anti-parallel to the third power semiconductor device 231. The fourth power semiconductor switch 24 comprises a fourth power semiconductor device 241 and a fourth diode 242 connected anti-parallel to the fourth power semiconductor device 241.

The third power semiconductor device 231 and the fourth power semiconductor device 221 are for example an IGBT or a SiC-based device, like a SiC MOSFET. Therefore, the third power semiconductor switch 23 and/or the fourth power semiconductor switch 24 comprise insulated-gate bipolar transistors and/or silicon carbide-based devices. Therefore, the switching circuit 20 comprises at least one of an IGBT and/or a SiC MOSFET.

The arrangement is not limited to just one submodule 10. A plurality of submodules 10 are for example connected in series to form a converter system 100.

While the disclosure is amenable to various modifications and alternative forms, specifics thereof are shown by way of example in the figures. It should be understood, however, that the intention is not to limit the disclosure to the particular described embodiments and examples. On the contrary, the intention is to cover all modifications, equivalents, and alternatives falling within the scope of the disclosure defined by the appended claims.

The embodiments shown in the Figures 1 and 3 as stated represent exemplary embodiments of the submodule; therefore, they do not constitute a complete list of all embodiments according to the submodule. Actual arrangements of the submodule may vary from the embodiments shown in terms of arrangements, devices for example.

### Reference Signs

- 10: submodule
- 11: first connecting terminal
- 12: second connecting terminal
- 20: switching circuit
- 21: first power semiconductor switch
- 211: first power semiconductor device
- 212: first diode
- 22: second power semiconductor switch
- 221: second power semiconductor device
- 222: second diode
- 23: third power semiconductor switch
- 231: third power semiconductor device
- 232: third diode
- 24: fourth power semiconductor switch
- 241: fourth power semiconductor device
- 242: fourth diode
- 30: energy storage circuit
- 31: first capacitor
- 32: split inductor
- 321: inductor
- 322: resistor
- 40: commutating system
- 41: second capacitor
- 50: first crowbar
- 51: first bypass thyristor
- 60: second crowbar
- 61: second bypass thyristor

- 100: converter system

## Claims

1. Submodule (10) for a converter system (100) comprising
- a first connecting terminal (11),
- a second connecting terminal (12),
- a switching circuit (20) with
- a first power semiconductor switch (21) and
- a second power semiconductor switch (22), which are connected in series and can be turned on and off, and wherein the first connecting terminal (11) is connected to the node between the first power semiconductor switch (21) and the second power semiconductor switch (22),
- an energy storage circuit (30) connected in parallel with the switching circuit (20), comprising
- a first capacitor (31) with a first capacitance,
- a split inductor (32), which is connected in series with the first capacitor (31) and adapted for limiting current amplitudes, and
- a second capacitor (41) with a second capacitance acting as part of a commutating system (40) and which is connected in parallel to the first capacitor (31) and the split inductor (32), and
- a first crowbar (50) with a first bypass thyristor (51), which is connected in parallel to the first capacitor (31) and which is adapted to dissipate energy from the first capacitor (31).

2. Submodule (10) according to claim 1, wherein the switching circuit (20) comprises
- a third power semiconductor switch (23) and
- a fourth power semiconductor switch (24), which are connected in series and can be turned on and off, and wherein the second connecting terminal (12) is connected to the node between the third power semiconductor switch (23) and the fourth power semiconductor switch (24).

3. Submodule (10) according to claim 2, wherein the third power semiconductor switch (23) and the fourth power semiconductor switch (24) are connected in parallel to the first power semiconductor switch (21) and the second power semiconductor switch (22).

4. Submodule (10) according to any of the preceding claims, wherein the first power semiconductor switch (21) comprises a first power semiconductor device (211) and a first diode (212) connected anti-parallel to the first power semiconductor device (211) and/or the second power semiconductor switch (22) comprises a second power semiconductor device (221) and a second diode (222) connected anti-parallel to the second power semiconductor device (221).

5. Submodule (10) according to any of the claims 2 to 4, wherein the third power semiconductor switch (23) comprises a third power semiconductor device (231) and a third diode (232) connected anti-parallel to the third power semiconductor device (231) and/or the fourth power semiconductor switch (24) comprises a fourth power semiconductor device (241) and a fourth diode (242) connected anti-parallel to the fourth power semiconductor device (241).

6. Submodule (10) according to any of the preceding claims, wherein the first power semiconductor switch (21) and/or the second power semiconductor switch (22) comprise insulated-gate bipolar transistors and/or silicon carbide-based devices.

7. Submodule (10) according to any of the claims 2 to 6, wherein the third power semiconductor switch (23) and/or the fourth power semiconductor switch (24) comprise insulated-gate bipolar transistors and/or silicon carbide-based devices.

8. Submodule (10) according to any of the preceding claims, wherein the split inductor (32) comprises an inductor (321) and a resistor (322) connected in parallel with the inductor (321), wherein the resistor (322) is a part of the commutating system (40).

9. Submodule (10) according to any of the preceding claims, wherein a second crowbar (60) is arranged in parallel to the first crowbar (50).

10. Submodule (10) according to claim 9, wherein the second crowbar (60) comprises a second bypass thyristor (61) and is connected in parallel with the first capacitor (31).

11. Submodule (10) according to any of the preceding claims, wherein the value of the second capacitance is smaller than the value of the first capacitance.

12. Converter system (100), wherein a plurality of submodules (10) according to any of the preceding claims are connected in series.
